# EUROPEAN PATENT APPLICATION

(11) **EP 1 868 096 A1**
(43) Date of publication of application: **19.12.2007**
(21) Application number: 06012276.9
(22) Date of filing: 14.06.2006
(51) Int. Cl.: G06F 11/14

(54) **Method and system for handling persistent data, Protocol for communication between a computer and a persistent storage unit**

(71) Applicant: Vodafone Holding GmbH, 40213 Düsseldorf (DE)
(72) Inventor: Gaida Klemens Dr., 40213 Düsseldorf (DE); Cameron Neill, 06902 Sophia-Antipolis (FR)
(74) Representative: Cullinane, Marietta Bettina

(57) **Abstract**

The present invention relates to a method for handling persistent data and/or information for use on a computer (2), which is characterized in that the computer (2) is at least temporarily connected to a persistent storage unit (3) device to instantiate a selective copy of the computer's persistent information and/or data, to be used on the computer (2) concurrently and/or subsequently. In addition a system for handling persistent data and/or information as well as a protocol for communication between the computer (2) and the persistent storage unit device (3) is described.

## Description

The present invention relates to a method and a system for handling persistent information and/or data for use on a computer as well as a protocol for communication between a computer and a persistent storage unit.

Computers provide the possibility of handling, in particular storing and processing, a considerable amount of data. In order to facilitate the usage of a computer some solutions have been developed, which simplify the usage of applications. For example web browser applications are designed to store navigation data on the computer and store authentication and identification information in order to make service access easier. Such authentication and identification data may be stored locally on the computer in so called session cookies which persist beyond the one login session or reboot of a computer.

However, often the computer owner will replace their hard disk, either accidentally or intentionally delete the persistent data off of their local disk or upgrade their computer to a new one and loose all persistent information - thus loosing all of the convenience data elements and important information which may have been stored on their computer.

US 2002/0087621 A1 suggests to remotely store and manage a computer user's internet navigation data from any computer in the world having access to the Internet.

This is accomplished by storing the data at a secure remote server and using a module coupled to the internet browser to redirect requests to access or store the internet navigation data to the remote server instead of to the user's local computer memory. As the navigation server is coupled to the Internet, the risk of attacks is considerable, which limits the usage of such a navigation server to navigation data, which is not crucial to the user. Additionally, this solution has the limitation that it requires a public remote Internet connection to be available in order to access this remotely stored Internet navigation data. Finally, the server is only designed to store Internet navigation data, which only represents a minor part of data and information, which is created and stored on a computer and is valuable to the user.

The problem underlying the invention is thus to provide a system and a method for handling persistent information and/or data for use on a computer, wherein the flexibility and control of the data and/or information for the user is increased, while the security of the persistent data and/or information is ensured.

The present invention is based on the finding, that the problem can be solved, by providing a separate storage unit for persistent information and/or data, which is external to the computer but does not require Internet connection for communicating with the computer.

According to a first aspect of the invention, the problem is solved by a method for handling persistent data and/or information for use on a computer. The method is characterized in that the computer is at least temporarily connected to a persistent storage unit device to instantiate a selective copy of the computer's persistent information and/or data, to be used on the computer concurrently and/or subsequently.

By establishing a copy of the persistent data and/or information at a device which is separate from the computer, the data and/or information will be available regardless of the state of the computer. If, for example, the hard disk of the computer is replaced, the persistent information and data originally stored on the removed hard disk will still be available for further use on the computer from the persistent storage unit device. As the persistent storage unit device is separate from the computer, the data and information stored thereon may also be made available to be used on a different computer. Thereby the user is flexible in choosing different computers and will always experience the same status regardless of the computer presently being used.

The copy, which is established will only include persistent data and/or information. In this respect the present invention differs from a backup copy or mirroring of the hard disk. Such a backup copy where all data and information stored on the hard disk is copied, requires a considerable memory space to be available. In addition such a backup copy can only be established within a reasonable time frame, if the backup device is connected to the computer via a wire.

The selective copy of persistent data and/or information instead can be made on a storage device with less memory than the hard disk and can also be established over a wireless connection. Hence, the user is more flexible and the persistent information and data stored at the persistent storage unit device can be made available to the user more easily. In particular, also a concurrent usage of the information and data will be possible, which will be described later in detail.

Persistent data and information according to the present invention is preferably any data or information that will at some point be written to disk, and then, later, read back in for further processing. In particular, the persistent information and/or data according to the present invention is application and/or persistent control information and data. The persistent data may in particular comprise application, state, session and authentication/authorization data elements as well as software.

The persistent data may for example be used to control the end point of a paid or secure service via the Internet, in order to make the use of applications and Internet services easier to access and use and personalize. Examples of these types of persistent data elements include certificates, login and password challenges and many others.

Additionally application persistence data elements may be elements to allow for the application state to be passed on after an application or computer restart. These elements may be stateful session beans, registry keys, file and pipe state information, http session objects, XML serialization to files, and many others such as this. The prime purpose of this persistent information and data of state control is to ensure state persistence beyond the restart of an application or restart of the computer that has been executing the application, session or internet service session.

Hence, the persistent data and/or information may comprise software, application information, application data, authentication and authorization information, remote Internet installation executables or stubs, application state information, device configuration information, session state information, certificates, cookies, serialized to files EJBs (Enterprise JavaBeans) and XML elements of application objects and structures, keys and/or licenses.

By copying such persistent data and/or information to a persistent storage unit in a persistent storage unit device, the state of the computer at the point of instantiation of the copy can be reconstructed at any time later and may also be reconstructed at a computer which is different from the computer in use, when the copy has been instantiated.

As the present invention allows for concurrent usage of the persistent data and information, it will become possible to run applications or use services on a computer by accessing the persistent storage unit device and using the persistent data and information stored thereon rather than any persistent data or information stored on the hard disk of the computer. This scenario will hereinafter also be referred to as persistent session. The persistent data and information generated while using the computer during such a session, may be written to a flash memory on the computer or to the persistent storage unit directly. Software that might be stored as persistent data on the persistent storage unit device may be accessed from the computer.

It is, however, also possible, that the data and information stored at the persistent storage unit device is being transmitted to the computer and being used at the computer.

According to one embodiment of the invention, the transmission of the computer's persistent information and/or data between the computer and the persistent storage unit device is initiated from the computer, when the persistent storage unit becomes available.

In this embodiment, the persistent data and information may be transferred to the storage unit device every time the computer detects the availability of the persistent storage unit device. Alternatively and preferably the data and information will be transmitted to the computer for use at the computer.

This automated transmission of persistent data and information may be a setting at the computer, which can be changed by the user. If the setting for auto-on is chosen, the computer will initiate the transmission. In that case, the data and/or information may preferably be transmitted from the persistent storage unit device to the computer. The computer will thus be in the state as it was at the time that the latest copy at the storage unit was created. Such a setting may in particular be preferable, if the user uses a different computer. In that case, the persistent data and/or information of the user may be accessed from the computer at the persistent storage unit device and a persistent session, where the persistent data and information at the storage unit is being used can be initiated. The establishing of a copy of data and information at the persistent storage unit device may be initiated from the computer, for example before turning of the computer or before ending the connection with the persistent storage unit device.

In order to increase the security of the persistent data and/or information, the persistent information and/or data may be encrypted before being transmitted between the computer and the persistent storage unit.

The encryption will in particular be useful, if the persistent storage unit device is connected to a server on the Internet, for example to create a backup of the persistent information and data stored on the persistent storage unit device on the network server. A preferred encryption method includes hash function encryption methods, in particular MD5 (Message Digest Algorithm 5) may be used, where a 128-Bit-Hashvalue will be created. In order to ensure reliable transmission and to avoid redundancy of information and data, also cyclic redundancy check (CRC) may be used. In this case, the calculated CRC value may preferably be checked against a correct value stored at the network server.

The transmission of persistent information and/or data between the computer and the persistent storage unit device according to the present invention may be performed via a wireless local area network (WLAN). Also different short range transmission or other wireless methods may be used. The data connection to the persistent storage unit device does therefore not necessarily require an Internet connection to be available. Hence, the security of the usage of the persistent data and information is increased.

Before transmission of the persistent data and/or information, preferably at least one device characteristic of the persistent storage unit device is checked and availability of persistent information and/or data on the persistent storage unit is checked. The characteristics of the persistent storage unit device that may be checked, may be characteristics relating to the class, the capabilities and/or the current storage limits. Only if the characteristics match the requirements for the data and/information to be transmitted, e.g. the size of the data and/information, the transmission of persistent data and/or information will be initiated to create a copy of the data and/or information. In addition, preferably the availability of persistent data and/or information will be checked prior to transmission. If data and/or information is available at the persistent storage unit device it may be transferred to the computer for usage or may be made available at the computer for concurrent usage. The availability of data and information at the persistent storage unit device may be indicated to the user of the computer, in order to avoid overwriting of data and/information at the persistent storage unit device, when the user is presently using a computer, the data and/information of which should not be stored for future or concurrent use. For example, the user may not whish to overwrite private persistent data and/or information with persistent data and/information available at an office computer. Nevertheless, the user may want to access the private data and/or information, when using the office computer. In that case, the data and/information from the persistent storage unit device may be used at the office computer and only a copy of the data and/information generated while using the data and/information, i.e. during a persistent session will be transferred back to the persistent storage unit device for storage.

The persistent information and/or data, which is being stored at the persistent storage unit device, may, hence, comprise persistent data and/or information generated during the use of the computer as well as or alternatively persistent information and/or data received from the persistent storage unit device at an earlier stage.

The persistent storage unit device is preferably customer's premises based. By providing a device at the home of the user or customer, defending the data and information stored thereon against access from other parties will be simplified compared to mere Internet based storage devices. In addition, access to the persistent storage unit device may be established via data communication standards, such as WLAN or WiFi.

The persistent storage unit device preferably has a longer lifetime than the computer storage. Equipment that may be used as the inventive persistent storage unit device may for example be a home Internet access device, a 3G/UMTS Internet access device, a WiFi Internet access device, a WiMax Internet access device, a residential gateway, a media center, an adsl modem, and/or other such residential premises based units.

An advantage of such devices for the usage as a persistent storage unit device is that the device can serve different purposes simultaneously.

According to a further aspect of the invention, the problem is solved by a system for handling persistent information and/or data for the use on a computer, wherein the system comprises at least one computer, at least one persistent storage unit device for persistent information and/or data. The system is characterized in that the persistent storage unit device is being operated on firmware and comprises an interface for establishing a data connection to the computer.

As the storage unit preferably device does not have an operating system but is operated by firmware, the stored data and/information is not easily accessible to unauthorized parties. In addition, the persistent storage unit device may be provided with components to act as a firewall or network addressing translation (NAT) component. Finally, the data and information transmitted between the computer and the persistent storage unit device will preferably be transmitted according to a specific communication protocol, stored at the persistent storage unit device. Also the instantiation of a copy and retrieving of data and information on the storage unit is preferably effected according to a protocol residing at the storage unit. The protocol may further comprise conditions for automatic retrieval and re-installation of data and information.

Preferably the actual storing and retrieval in the persistent storage unit device is effected on storage unit which can be an electrically erasable programmable Read-Only Memory (EEPROM), a customized Application-Specific Integrated Circuit (ASIC), a customized microprocessor or Integrated Circuit, a flash storage, an optical storage, an magnetic storage, and/or an external mobile storage device.

According to a further aspect, the invention relates to a protocol for communication between a computer and a persistent storage unit for persistent information and/or data, wherein a communication connection is initiated from the computer or the persistent storage unit device, whereby availability of persistent information and/or data on the persistent storage unit is checked before transmission of persistent information and/or data is initiated.

Preferably at least one device characteristic of the persistent storage unit device is checked before transmission of persistent information and/or data is initiated.

Features and advantages which are described with reference to the inventive method also apply to the inventive system and protocol and vice versa.

The invention will be explained again with reference to the enclosed Figure, wherein:

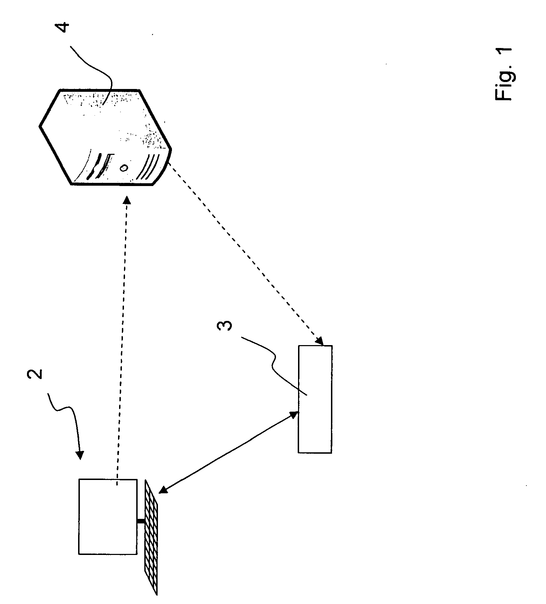

Figure 1: shows a system, wherein the inventive method may be used.

In system 1 in Figure 1 comprises a computer 2, such as a PC or Laptop. This computer 2 can at least temporarily be connected to a persistent storage unit device 3 according to the present invention. In addition, the computer 2 may be in communication connection with a network server 4. The communication connection to the server 4 from the computer 2 is established via the internet and may be used to access Internet based services or data. The connection from the persistent storage unit device 3 to the server 4 may be used to transfer data and/or information to the server 4, in order to create a back up copy thereon. Finally the connection of the computer 2 to the persistent storage unit device 3 via the server 4 may be used in cases, where no other data connection can be established between the computer and the persistent storage unit device 3. The preferred data connection between the computer 2 an the persistent storage unit device 3 will be described with reference to a use case.

When the user runs applications or uses services on the computer 2, persistent data and information will be generated. For example application information, application data, authentication and authorization information, remote Internet installation executables or stubs, application state information, device configuration information, session state information, certificates, cookies, serialized to files EJBs and XML elements of application objects and structures, keys and/or licenses will be generated or will become available. In addition software to perform the application has to be available at the computer 2. This data and/or information will be stored locally at the computer 2.

The computer 2 is equipped with an interface to establish a data connection to other devices. In one embodiment the interface will allow data connection to devices via WLAN.

The persistent storage unit device 3, which is preferably located at the home of the user, will also be equipped with an interface for data connection. If the user of the computer 2 or, if an automated setting is chosen, the computer 2 itself detects the persistent storage unit device 3, the data connection may be established. Via this data connection the persistent data and information created or used on the computer 2 may be transmitted between the computer and the persistent storage unit device 3.

At the first establishment of the data connection, the persistent data and/or information from the computer 2 will be copied to the persistent storage unit device 3. This instantiation of a copy may be effected automatically or manually by the user.

The data and information on the persistent storage unit device 3 will then be available for later or concurrent usage of the computer 2, where it was generated at or at a different computer.

If at that stage the hard disk of the computer 2 is exchanged or if the user uses a different computer, the persistent data and/or information may be made available at the new or upgraded computer from the persistent storage unit device 3. The data and information stored in the persistent storage unit device 3 will be transmitted to the computer and applications or services run at the computer can use this information or data.

If the user disconnects the data connection to the persistent storage unit device 3 and at later stage reconnects to the persistent storage unit device 3, the data and/or information available at that point may be transferred to the persistent storage unit device 3 to create a fresh or updated copy. Alternatively, the user may decide to use the information and/or data as presently available at his computer 2, rather then the data and/or information available at the persistent storage unit device 3. In this case, the data connection to the persistent storage unit device 3 may be disconnected or the user may choose to not create a copy to the persistent storage unit device 3 and to not use the information and data available thereon.

In order to manage the communication to the persistent storage unit device 3 on the screen of the computer 2, a tool bar may be displayed, wherein one option may be the selection of connections to other devices. In a selection list the persistent storage unit device 3 may be included.

Options which may be given to the user are the managing of the storage unit, e.g. changing or creating settings for communication with the storage unit. In addition activation options may be given to the user. In particular the enabling of persistent software or persistent sessions may be offered to the user as options.

The communication between the computer 2 and the persistent storage unit device 3 will be governed by a protocol. The protocol, which will hereinafter also be referred to as a cpe (consumer persistent equipment) persistence protocol, may use communication via known ports or other mechanisms. According to the protocol the device class, capabilities and current storage limits of the persistent storage unit device 3 may be checked. The computer may then query the persistent storage unit device 3 for persistence data or information which is available thereon. According to the protocol it will also be possible to store software into the persistent storage unit device 3. The communication may employ MD5/CRC methods.

The data and information stored on the persistent storage unit device 3 may be retrieved according to the protocol.

If the computer 2 is set to auto discover near-proximity devices, it will be able to also identify the persistent storage unit device 3. Once a connection is established with the persistent storage unit device 3 features, i.e. data or information, from the persistent storage unit device 3 may be added to software used at the computer.

The user can manually choose to enable such persistent software or persistent session. It is, however, possible that the enabling of persistent software/sessions is selected to be automatically activated if the persistent storage unit device 3 is detected by the computer 2.

The external persistent storage unit device according to the present invention is extremely secure in that it typically has no operating system, often is acting as a firewall or network addressing translation component and has persistent storage for application and persistent control data along with a predefined storage and automatic retrieval and re-installation protocol on the persistent storage unit device which is activated. The activation could be either by user request, be set as a default behaviour, or by a physical token or connection to the computer.

## Claims

1. Method for handling persistent data and/or information for use on a computer (2), **characterized in that** the computer (2) is at least temporarily connected to a persistent storage unit (3) device to instantiate a selective copy of the computer's persistent information and/or data, to be used on the computer (2) concurrently and/or subsequently.

2. Method according to claim 1, **characterized in that** the transmission of the computer's persistent information and/or data between the computer (2) and the persistent storage unit device (3) is initiated from the computer (2), when the persistent storage unit device (3) becomes available.

3. Method according to claim 1, **characterized in that** the persistent information and/or data is encrypted before being transmitted between the computer (2) and the persistent storage unit device (3).

4. Method according to any of claims 1 to 3, **characterized in that** the transmission of persistent information and/or data between the computer (2) and the persistent storage unit device (3) is performed via a wireless local area network (WLAN).

5. Method according to any of claims 1 to 4, **characterized in that** at least one device characteristic of the persistent storage unit device (3) is checked and availability of persistent information and/or data on the persistent storage unit is checked before the persistent data and/or information is being transferred.

6. Method according to any of claims 1 to 5, **characterized in that** persistent information and/or data is application and/or persistent control information, in particular software, application information, application data, authentication and authorization information, remote Internet installation executables or stubs, application state information, device configuration information, session state information, certificates, cookies, serialized to files EJBs and XML elements of application objects and structures, keys and/or licenses.

7. Method according to any of claims 1 to 6, **characterized in that** persistent information and/or data is generated during the use of the computer (2) and/or received from the persistent storage unit device (3) is stored.

8. Method according to any of claims 1 to 7, **characterized in that** the persistent storage unit device (3) is customer's premises based.

9. System for handling persistent information and/or data for the use on a computer (2), wherein the system comprises at least one computer (2), at least one persistent storage unit device (3) for persistent information and/or data, **characterized in that** the persistent storage unit device (3) is being operated on firmware and comprises an interface for establishing a data connection to the computer (2).

10. Protocol for communication between a computer (2) and a persistent storage unit device (3) for persistent information and/or data, wherein a communication connection is initiated from the computer (2) or the persistent storage unit device (3), whereby availability of persistent information and/or data on the persistent storage unit is checked before transmission of persistent information and/or data is initiated.

11. Protocol according to claim 10, **characterized in that** at least one device characteristic of the persistent storage unit device (3) is checked before transmission of persistent information and/or data is initiated.
